# EUROPEAN PATENT APPLICATION

(11) **EP 0 782 912 A1**
(43) Date of publication of application: **09.07.1997**
(21) Application number: 96101526.0
(22) Date of filing: 02.02.1996
(51) Int. Cl.: B29D 23/00

(54) **Tubular film from which masking film for use in painting is produced**

(30) Priority: 06.12.1995 JP 13941/95
(71) Applicant: Yoshino Kasei Company Limited, Hachioji-shi, Tokyo 192-01 (JP)
(72) Inventor: Yoshino, Takashi, c/o Yoshino Kasei Co. Ltd., Hachioji-shi, Tokyo 192-01 (JP)
(74) Representative: Hansen, Bernd, Dr. Dipl.-Chem.

(57) **Abstract**

The invention provides a tubular film of a polyolefin resin from which a masking film is produced and of which the inner surface has been corona-discharged.

The tubular film can be formed into a masking film by simple operation merely comprising cutting it open followed by attaching an adhesive tape thereto along its one lengthwise edge. The masking film thus produced is surely free from the problem in its actual use in painting.

## Description

### BACKGROUND OF THE INVENTION

### Field of the Invention

The present invention relates to a tubular film from which a masking film for use in painting is produced. Precisely, the present invention relates to a tubular film of a polyolefin resin of which the inner surface has been corona-discharged and from which a masking film is produced. The masking film is utilized in painting constructions, pavements, airports, sports grounds, floors, walls, cars, ships, airplanes, vehicles, machines, office supplies, sports goods, amusement goods, leisure goods, displays, toys, woodwork, household articles, etc.

### Prior Art

Various paintings are applied to many kinds of constructions, pavements, sports grounds, car parks, cars, vehicles and other various articles in order to make them have good appearance or to put thereon marks, ruled signs and illustrations. To attain such paintings, an area not to be painted with a coating material is previously masked with paper, synthetic paper, non-woven fabric, plastic film or the like by which it is easily separated from an area to be painted. Accordingly, any direct application of a coating material to the surface of the area not to be painted therewith is prevented, and even when the coating material that has been applied to the area to be painted migrates to the area that shall not be painted, it is not in direct contact with the latter but is blocked by the paper, synthetic paper, non-woven fabric, plastic film or the like that has covered the area not to be painted. In this manner, the area that shall not be painted with a coating material is shielded and protected from being painted with the material. The above-mentioned paper and other films capable of exhibiting this function are referred to as masking films.

Various types of masking films have heretofore been employed, depending on the shape of the substance to be painted, the area to be painted, the properties of the coating material to be used, the temperature at which the coated material is baked, the temperature at which the coated material is dried, etc. Recently, the masking materials produced from a tubular film obtained by inflation of a polyolefin resin have been most popularly used in view of their costs and properties, and the like.

Prior masking film for use in painting produced from a tubular film comprising one or another polyolefin resin is concretely produced by inflating the polyolefin resin into a tubular film, conveying it in the lengthwise direction in order while subjecting the outer surface to corona-discharging and applying thereto a thin metal cutter at one site of the film to thereby make the film have a break in the lengthwise direction, then flattening the film with rollers, rotating one edge of the film, along which it has been cut, by 180 degrees around the lengthwise direction of the right-handed end or the left-handed end of the film as the rotation axis to thereby make the inner surface of the film face upside, then sticking an adhesive tape on the film along one edge thereof in the lengthwise direction in such a way that the adhesive layer of the tape is made to face the corona-discharged surface of the film while the tape is made to partly overlap with the edge of the film (that is, the adhesive layer of the adhesive tape is on the same side as the corona-discharged surface of the film that is not rotated to be left duplicate), and finally winding up the film around a paper tube into a roll.

However, in the prior masking film mentioned above, the adhesive surface of the adhesive tape as adhered to the masking film is on the same plane as the corona-discharged surface of the film that is positioned along the edge of the tape in the widthwise direction as seen from the adhered part of the tape, though there is a distance of several centimeters therebetween. Therefore, while the masking film roll is unrolled and is applied to a substance to be masked therewith, the edge of the corona-discharged film being unrolled is trailed by the adhesive tape along its adhesive surface. For these reasons, the operation of unrolling and applying the masking film to the substance to be masked therewith is extremely difficult. Thus, there have demands to dissolve these problems.

Given the situation as above, the subject matter of the present invention is to provide a tubular film comprising a polyolefin resin from which a masking film free from the problems in its actual use in painting can be produced. Another subject matter of the present invention is to provide a masking film for use in painting produced from the tubular film of the invention.

### SUMMARY OF THE INVENTION

Specifically, the present invention provides a tubular film from which a masking film to be used in painting is produced, the tubular film having been produced by inflation of a polyolefin resin to have a thickness of from 5 to 40 µm and being characterized in that its inner surface has been corona-discharged to have a wetting tension of 40 dyn/cm or more.

In additon, the present invention provides a method for producing a masking film roll to be used in painting, which comprises;
a step 1 of inflating a polyolefin resin to form a tubular film,
a step 2 of bringing the outer surface of the tubular film into contact with at least a pair of electrodes to which is being applied a high-voltage current, while the tubular film is being run with having a gas therein and while the upper and lower sides of the inner surface of the tubular film are not stuck together but are separated from each other by a distance of from 1 to 7 mm due to the gas existing therebetween, whereby the inner surface of the tubular film is subjected to corona-discharging to be able to have an elevated wetting tension of 40 dyn/cm or more,
a step 3 of making the thus-corona-discharged tubular film have a break in the lengthwise direction while the film is being conveyed in order in the lengthwise direction,
a step 4 of flattening the tubular film thus having the break therethrough, by means of rollers,
a step 5 of turning by 180 degrees the upper part of the flattened film that exists in either the left-sided portion or the right-sided portion as separated by the break that has been imparted to the film in the previous step 3, around the left-sided or right-sided end of the film as seen in the lengthwise direction of the film as the rotation axis, thereby exposing the inner surface of the film outside,
a step 6 of attaching an adhesive tape to the thus-exposed, corona-discharged surface of the film along the lengthwise edge of the film in such a way that the adhesive layer of the tape is made to face the corona-discharged surface of the film while the tape is left to be partly non-attached to the film,
a step 7 of folding the film in parallel in the lengthwise direction and toward the corona-discharged surface thereof, and
a step 8 of winding up the film as obtained in the step 7 around a tubular core.

As one preferred embodiment of the above-mentioned method of the present invention, the step 6 is conducted in such a way that the lengthwise right-sided or left-sided adhesive layer part having a width of from 2 to 15 mm of the adhesive tape having a width of from 3 to 20 mm is attached to the surface of the lengthwise left-sided or right-sided edge having a width of from 1 to 10 mm of the film while the remaining lengthwise left-sided or right-sided adhesive layer part therefore having a width of from 2 to 19 mm of the adhesive tape is left to be non-attached.

The present invention also provides a masking film roll to be produced according to the method mentioned above, which is characterized in that one lengthwise edge of the open-width film is positioned with the corona-discharged surface thereof being made to face upside, that the lengthwise edge of the film has an adhesive tape as lengthwise partly attached thereto in such a way that the adhesive surface of the tape is made to face the corona-discharged surface of the film, that the film is folded opposite to the adhesive surface of the tape at any desired site in the widthwise direction of the film and around the folding axis in the lengthwise direction of the film, and that the film with the thus-folded parts thereof being placed one upon another is wound up around a tubular core in the direction perpendicular to the lengthwise direction of the film into a roll.

One preferred embodiment of the masking film roll of the present invention mentioned above is such that a part of the open-width film, the lengthwise left-handed edge part having a width of from 2 to 20 mm of the film (hereinafter referred to as "2 to 20 mm-wide film part") is positioned with its corona-discharged surface being made to face upside, while the lengthwise right-handed edge part of the adhesive tape is attached to the edge part of the film with the adhesive surface of the tape being made to face the corona-discharged surface of the film, that a part of the open-width corona-discharged film having a width of from 10 to 140 cm, which exists in the right-handed side of the 2 to 20 mm-wide film part and continuous thereto as another part of the open-width film, is folded nearly at the center in the widthwise direction of the film around the folding axis in the lengthwise direction of the film, that the thus-folded film part having a width of from 5 to 70 cm is made to have its corona-discharged surface facing backward and is placed on the 2 to 20 mm-wide film part and also on the other film part that is right-handed and continuous to the 2 to 20 mm-wide film part with the corona-discharged surfaces of the both parts being made to face each other, that the thus-over laid film part is further folded for at least one gazette-like folding or for at least one rotary folding around the lengthwise direction of the film as the rotation axis, that the adhesive surface of the adhesive tape is positioned to face opposite to the non-corona-discharged surface of the 5 to 70 cm-wide folded film part, and that the film thus arranged is wound up around a tubular core in the direction perpendicular to the lengthwise direction of the film. In the preferred embodiment mentioned above, the tubular film is cut open and the resulting open-width film is rotated in the left-sided direction. However, such has been referred to herein only as a mere illustrative embodiment by which the technical content of the present invention can be easily understood, and is not whatsoever limitative. Needless-to-say, the open-width film may be rotated in the right-handed direction to attain the same effects as in the illustrated embodiment where the film is rotated in the left-handed direction.

### BRIEF DESCRIPTION OF THE DRAWINGS

Fig. 1 is a widthwise cross-sectional view showing the tubular film as obtained in Example 1 of the present invention, from which a masking film to be used in painting is produced.

Fig. 2 is a perspective view showing the tubular film roll as obtained in Example 1 of the present invention, from which a masking film to be used in painting is produced.

Fig. 3 is a perspective view showing the masking film roll as obtained in Example 2 of the present invention.

### DETAILED DESCRIPTION OF THE INVENTION

The polyolefin resin for use in the present invention includes, for example, high-density polyethylenes, middle-density polyethylenes, high-pressure low-density polyethylenes, linear low-density ethylene-α -olefin copolymers, ethylene-vinyl acetate copolymers, ethylene-acrylate copolymers, polypropylenes, etc.

Of these, preferred are high-density polyethylenes as having high mechanical strength, easy widthwise tearability, easy handleability, easy workability, good heat resistance and good cold resistance. Above all, most preferred are high-density polyethylenes having a density of from 0.945 to 0.965 g/cm³ and a melt index of from 0.03 to 1.5 g/10 min. The density as referred to herein is obtained according to JIS-K7112. Films of high-density polyethylenes having a density of lower than 0.945 g/cm³ are not tough and are difficult to handle, while those having a density of more than 0.965 g/cm³ are not also favorable since they are too easily torn due to the great difference between the lengthwise orientation and the widthwise orientation. The melt index as referred to herein is obtained according to JIS-K7210. High-density polyethylenes having a melt index of lower than 0.03 g/10 min cannot be formed into films by high-speed filming operation and therefore the producibility of films from these is poor, while those having a melt index of higher than 1.5 g/10 min shall have a too small viscosity and are therefore also unfavorable since the stability of their melts is poor.

The production of the tubular film by inflation in the present invention may be conducted in any ordinary manner where a polyolefin resin is extruded through a circular die at temperatures not lower than its melting point to give a tubular film while introducing air into the film, which is then cooled in air or water. Any desired condition may be applied to this, but it is desirable that the tubular film thus formed has a thickness of from 5 to 40 µm. This is because if the thickness is less than 5 µm, the film is not tough and is difficult to handle, but if it is more than 40 µm, the cost of the filmincreases and, in addition, the masking film roll to be produced from this is unfavorably too bulky.

The corona discharging of the inner surface of the tubular film in the present invention may be conducted in such a manner that the outer surface of the film is brought into contact with at least a pair of electrodes, to which is being applied a high-voltage current, while the tubular film is being run with having therein a gas, such as air, nitrogen gas, argon gas, xenon gas, carbon dioxide or the like, and while the upper and lower sides of the inner surface of the tubular film are not stuck together but are separated from each other by a distance of from 1 to 7 mm due to the gas existing therebetween, whereby the inner surface of the tubular film is subjected to corona discharging to be able to have an elevated wetting tension of 40 dyn/cm or more.

As mentioned above, the inner surface of the tubular film of the present invention must be activated by the corona discharging as applied thereto to be able to have a wetting tension of 40 dyn/cm or more. If the wetting tension of the film is lower than 40 dyn/cm, the adhesion of a coating material to the surface (corona-discharged surface) of the film is poor with the result that the coating material as scattered onto the surface of the film easily runs thereon to often flow downward and that the coating material as adhered to the surface of the film easily peels off therefrom and scatters, after having been dried, to unfavorably worsen the working environment.

Most desirably, the inner surface of the tubular film of the present invention has a wetting tension of 45 dyn/cm or more.

Corona discharging has been disclosed in detail, for example, in Japanese Patent Publication No. Sho 61-24412 (JP-B 61-24412). Although the corona-discharging technique as disclosed therein is directed to the inner surface of a tubular film, the film is used only for packing meat therewith and the publication merely refers to the effect of the meat-packing film in that the meat as packed with the film is well airtightly sealed. The publication does not suggest at all the applicability of the tubular film to a masking film to be used in painting such as that of the present invention.

The tubular film, of which the inner surface has been corona-discharged in the manner as mentioned above, may be wound up around a tubular core such as a paper tube or the like to be a film roll or may be folded to have a suitable length as a final product, without being subjected to the next step.

In the step 3 of the present invention, the tubular film that has been corona-discharged in the previous step 2 is made to have a lengthwise break, while the film is being conveyed in order in the lengthwise direction, for example, by applying a thin metal cutter, laser rays, heat spots or the like to one site of the film, whereby the tubular film is cut open to a film strip.

The film thus having been cut open in the step 3 and flattened in the step 4 (film strip) is folded in parallel in the lengthwise direction in the step 7 to attain the masking film of the present invention. If the tubular film is directly pressed and partly cut open to be a final product, the product is too broad and therefore needs a large space for storing it. In addition, if such a broad film is used as a masking film in painting, it is difficult to handle. In order to evade such unfavorable troubles and to obtain compact products, the folding step 7 is indispensable in the method of the present invention. To fold the film, any of gazette-like folding, multiple folding and other folding means may be employed, but it is necessary that the film shall not be folded onto the non-corona-discharged surface thereof that is positioned at the same side as the adhesive surface of the adhesive tape as attached to the film. If the folded film is on the same side as the adhesive surface of the adhesive tape, a part of the film will be trailed by the adhesive tape, when the film is applied to the substanceto be masked therewith via the adhesive tape. If so, the folded part of the masking film being used could no more be unfolded to be open.

The folding step 7 can be conducted directly after the step 4 or after the step 5 or 6.

In the step 5, the lengthwise left-sided or right-sided edge of the film as having been cut open in the previous step 3 is rotated by 180 degrees along the lengthwise side of the film as the rotation axis whereby the inner surface of the film is exposed outside. As a result of the step 5, the corona-discharged inner surface of the film is turned outside and it becomes possible to attach an adhesive tape to the lengthwise edge of the inner surface of the film.

In the present invention, the step of attaching an adhesive tape to the lengthwise left-handed or right-handed edge of the corona-discharged inner surface of the masking film in such a way that the adhesive layer of the tape is made to face the corona-discharged inner surface of the film while the lengthwise left-sided or right-sided edge of the tape is left to be non-attached is indispensable in order that the adhesive tape, via which the film is applied to a substance to be masked therewith in such a manner that the corona-discharged surface of the film is kept outside while the corona-non-discharged surface thereof is kept inside, is partly fixed to the film. Preferably, in this step, the lengthwise right-handed or left handed adhesive layer part having a width of from 2 to 15 mm of the adhesive tape having a width of from 3 to 20 mm is attached to the surface of the lengthwise left-sided or right-sided edge having a width of from 1 to 10 mm of the film while the remaining lengthwise left-sided or right-sided adhesive layer part therefore having a width of from 2 to 19 mm of the adhesive tape is left to be non-attached.

In the step 8 of the present invention of winding up the adhesive tape-attached film as obtained in the previous step 6 around a tubular core, the film is wound up into a compact film roll as the final product. The tubular core may be any of a paper tube, a plastic tube, a metal tube, a wood tube and the like. In view of the costs and the properties, a paper tube is preferred.

As has been described in detail in the above, the tubular film of the present invention can be formed into a masking film by simple operation of merely cutting it open followed by attaching an adhesive tape to one lengthwise edge of the film. The masking film thus produced from the tubular film of the present invention is surely free from the problem in its actual use in painting. Precisely, when the masking film is used in painting a substance by attaching it to the part of the substance that shall not be painted, the film is not trailed by the adhesive tape. Moreover, the masking ability of the maskingfilm to be produced from the tubular film of the present invention is excellent in that a coating material can easily adhere to the film without running thereon and that the coating material that has adhered to and dried on the film hardly peels off therefrom. Furthermore, the masking film has extremely excellent handleability and workability, and it is possible to reduce the space for storing it. The tubular film of the present invention, from which a masking film with such excellent handleability and workability can be produced, can be produced by a process comprising simple steps and the costs for producing the tubular film can be lowered.

When a particular high-density polyethylene is used as the starting polyolefin resin to be filmed according to the present invention, it is possible to obtain a tubular film to be able to be formed into a masking film having especially excellent mechanical characteristics, producibility and handleability.

In addition, when the Inner surface of the tubular film of the present invention is made to have a wetting tension of 45 dyn/cm or more, the tubular film can be produced into a masking film having especially excellent masking characteristics.

Also, the method for producing a masking film roll to be used for painting according to the present invention is novel in that the inner surface of a tubular film of a polyolefin resin is continuously corona-discharged, that the tubular film is cut open and then folded in the lengthwise direction in a particular manner, that an adhesive tape is attached to the film along its lengthwise one edge in such a manner that the adhesive surface of the tape is made to face the corona-discharged surface of the film, that the film is then wound up around a tubular core to be a roll, and that these steps constitute a continuous on-line process. Accordingly, the method of the present invention is more simple and produces more easily the intended product than any other conventional method, and the costs for the former are lower than those for the latter.

Since the masking film roll thus produced according to the method of the present invention has a structure different from the structure of any other conventional masking film rolls, the masking ability of the former is superior to that of the latter in that a coating material can more easily adhere to the former without running thereon and that the coating material that has adhered to and dried on the former does not peel off therefrom. Moreover, the masking film roll of the present invention has extremely excellent handleability and workability, and it is possible to reduce the space for storing it.

### EXAMPLES

Next, the present invention will be described in more detail by means of the following examples, which, however, are not intended to restrict the scope of the present invention.

### Example 1:

This is to demonstrate the production of a tubular film of the present invention.

A high-density polyethylene having a density of 0.952 g/cm³ and a melt index of 0.8 g/10 min was extruded through a die at 195°C and inflated at a blow rate of 4.3 and at a winding-up rate of 55 m/min, while cooling in air, to form a tubular film having a thickness of 10 µm and a lay flat width of 30 cm.

After having been filled with air and sealed to have an inner space of 2 mm, this was corona-discharged, using a corona discharger (ex Kasuga Electric Co.) as directed to the inner surface of the tubular film, to make its inner surface have a wetting tension of 47 dyn/cm. Next, the film was flattened with rollers and then wound up around a paper tube having a diameter of 3 cm. Thus, a tubular film roll having a diameter of 30 cm was obtained.

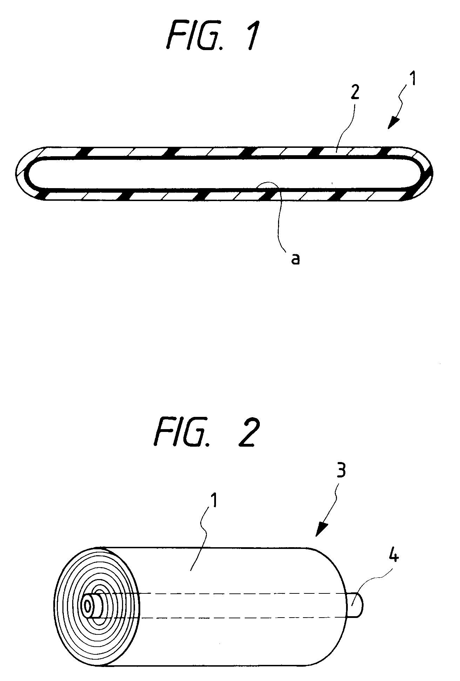

Fig. 1 is a widthwise cross-sectional view showing the tubular film 4 which was corona-discharged but was not flattened. In Fig. 1, 5 is a film of a polyolefin resin (in this example, this is a high-density polyethylene), and a is the corona-discharged inner surface of the film 5. Fig. 2 shows the tubular film roll 6 obtained herein, in which the film 4 was wound up around the paper tube 1.

### Example 2:

This is to demonstrate the production of a masking film of the present invention to be used in painting.

A high-density polyethylene having a density of 0.948 g/cm³ and a melt index of 0.06 g/10 min was extruded through a die at 190°C and inflated at a blow rate of 4.5 and at a winding-up rate of 50 m/min, while cooling in air, to form a tubular film having a thickness of 10 µm and a lay flat width of 25 cm.

After having been filled with air and sealed to have an inner space of 2 mm, this was corona-discharged, using a corona discharger (ex Kasuga Electric Co.) as directed to the inner surface of the tubular film, to make its inner surface have a wetting tension of 45 dyn/cm.

A thin razor's edge was applied to the upper surface of the flattened, tubular film nearly at its center (since the lay flat width of the film is 25 cm, the razor's edge was applied to the site of 10 cm from the left-handed end of the film), by which the film was made to have a lengthwise break in parallel to the lengthwise direction of the film. Next, the upper part of the film existing in the left of the break was rotated by 180 degrees around the left side of the film as the rotation axis, whereby the corona-discharged inner surface of the part of the film was exposed outside.

A part (having a lengthwise width of 5 mm) of an adhesive tape having a width of 15 mm was attached to the corona-discharged inner surface of the part of the film along the lengthwise left-handed edge (having a width of 5 mm) thereof in such a way that the adhesive surface of the tape might face the corona-discharged inner surface of the film.

On the other hand, the other part of the film than the above-mentioned one was folded by repeated gazette folding and double folding to make it folded six times in such a way that the lowermost part of the folded film might be positioned opposite to the adhesive surface of the adhesive tape.

The film thus prepared in the manner as mentioned above was wound up around a paper tube having a length of 12 mm and a diameter of 2 cm to be a film roll of having of a diameter of 7 cm. Thus, a masking film roll to be used in painting was obtained.

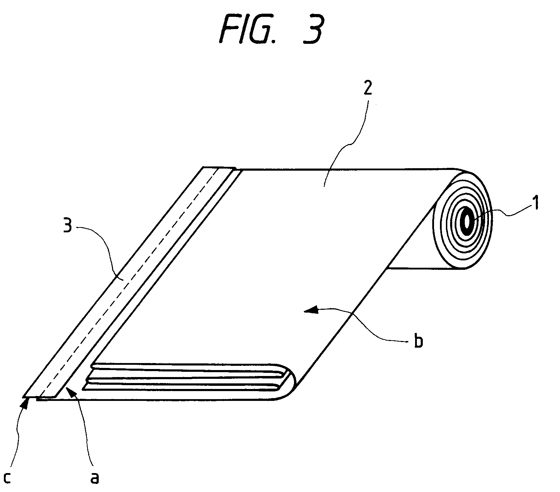

Fig. 3 shows the film roll thus obtained, where one widthwise edge thereof has been partly unrolled. In Fig. 3, 1 is the paper tube, 2 is the film, 3 is the adhesive tape, and a, b and c are the corona-discharged surface of the film 1, the non-corona-discharged surface thereof, and the adhesive surface of the adhesive tape 3, respectively.

The film roll was tested with respect to the following matters, and the test results are mentioned below.

### a. Handleability:

The film roll was unrolled and stuck on a wood board as stood vertically, via the adhesive tape in such a manner that the adhesive tape might be horizontal in a length of 30 cm, and the remaining part of the film roll was torn off by hand. The film roll was small, as having a width of 12 cm and a diameter of 7 cm, and was easily caught in the palm of the hand. After having been attached to the wood board, the folded part of the film hung down due to its gravity to be opened flat. Thus, the handle ability of the film roll was extremely good.

### b. Adhesiveness of coating material:

A red acrylic paint was applied to the surface of the film at a dry thickness of 20 µm, whereupon the paint uniformly adhered to the film without running down. After the paint had been dried, the masking film was peeled off from the wood board, whereupon the dried paint did not peel off from the film. In addition, the film with the paint was crumpled by hand but the paint did not peel off from the film yet.

While the invention has been described in detail and with reference to specific embodiments thereof, it will be apparent to one skilled in the art that various changes and modifications can be made therein without departing from the spirit and scope thereof.

## Claims

1. A tubular film from which a masking film to be used in painting is produced, the tubular film having been produced by inflation of a polyolefin resin to have a thickness of from 5 to 40 µm and being characterized in that its inner surface has been corona-discharged to have a wetting tension of 40 dyn/cm or more.

2. The tubular film as claimed in claim 1, wherein the polyolefin resin is a high-density polyethylene having a density of from 0.945 to 0.965 g/cm³ and a melt index of from 0.03 to 1.5 g/10 min.

3. The tubular film as claimed in claim 2, wherein the polyolefin resin is a high-density polyethylene having a density of from 0.950 to 0.965 g/cm³ and a melt index of from 0.07 to 1.5 g/10 min.

4. The tubular film as claimed in any one of claims 1 to 3, wherein the inner surface of the tubular film has a wetting tension of 45 dyn/cm or more.
